# EUROPEAN PATENT APPLICATION

(11) **EP 4 137 986 A1**
(43) Date of publication of application: **22.02.2023**
(21) Application number: 22174308.1
(22) Date of filing: 19.05.2022
(51) Int. Cl.: G06F 40/30, G06F 40/295, G06F 16/36, G10L 13/00

(54) **PROSODY STYLE DETERMINATION METHOD AND APPARATUS, DEVICE AND COMPUTER STORAGE MEDIUM**

(30) Priority: 17.08.2021 CN 202110941665
(71) Applicant: BEIJING BAIDU NETCOM SCIENCE AND TECHNOLOGY CO. LTD., 100085 Beijing (CN)
(72) Inventor: DING, Shiqiang, Beijing, 100085 (CN); HUANG, Jizhou, Beijing, 100085 (CN); WU, Di, Beijing, 100085 (CN)
(74) Representative: dompatent von Kreisler Selting Werner - Partnerschaft von Patent- und Rechtsanwälten mbB

(57) **Abstract**

The present disclosure discloses a broadcast style determination method and apparatus, a device and a computer storage medium, and relates to voice and deep learning technologies in the field of artificial intelligence technologies. A specific implementation solution involves: performing named entity recognition on broadcast text to obtain at least one named entity; acquiring domain knowledge corresponding to the at least one named entity; and performing sentiment analysis by using the broadcast text and the domain knowledge, to determine a broadcast style of the broadcast text. According to the present disclosure, broadcast voice can be more emotional.

## Description

### Field of the Disclosure

The present disclosure relates to the field of computer application technologies, and in particular, to voice and deep learning technologies in the field of artificial intelligence technologies.

### Background of the Disclosure

A voice assistant function is integrated into more and more intelligent terminals. A voice assistant can broadcast content or interact with users in the form of voice, but voice broadcast by the voice assistant is mostly flat and stiff. With the continuous improvement of user requirements, when talking to the voice assistant and get basic information, people also want the voice broadcast by the voice assistant to be more emotional.

### Summary of the Disclosure

In view of the above, the present disclosure provides a broadcast style determination method and apparatus, a device and a computer storage medium, so as to accurately determine a broadcast style suitable for broadcast text.

According to a first aspect of the present disclosure, a broadcast style determination method is provided, including:
performing named entity recognition on broadcast text to obtain at least one named entity;
acquiring domain knowledge corresponding to the at least one named entity; and
performing sentiment analysis by using the broadcast text and the domain knowledge, to determine a broadcast style of the broadcast text.

According to a second aspect of the present disclosure, a broadcast style determination apparatus is provided, including:
an entity recognition unit configured to perform named entity recognition on broadcast text to obtain at least one named entity;
a knowledge acquisition unit configured to acquire domain knowledge corresponding to the at least one named entity; and
a sentiment analysis unit configured to perform sentiment analysis by using the broadcast text and the domain knowledge, to determine a broadcast style of the broadcast text.

According to a third aspect of the present disclosure, an electronic device is provided, including:
at least one processor; and
a memory in communication connection with the at least one processor; wherein
the memory stores instructions executable by the at least one processor, and the instructions are executed by the at least one processor to enable the at least one processor to perform the method as described above.

According to a fourth aspect of the present disclosure, a non-transitory computer-readable storage medium storing computer instructions is provided, wherein the computer instructions are configured to cause a computer to perform the method as described above.

According to a fifth aspect of the present disclosure, a computer program product is provided, including a computer program, wherein, when the computer program is executed by a processor, the method as described above is performed.

It should be understood that the content described in this part is neither intended to identify key or significant features of the embodiments of the present disclosure, nor intended to limit the scope of the present disclosure. Other features of the present disclosure will be made easier to understand through the following description.

### Brief Description of Drawings

The accompanying drawings are intended to provide a better understanding of the solutions and do not constitute a limitation on the present disclosure. In the drawings,
FIG. 1 is a general flowchart of a method according to an embodiment of the present disclosure;
FIG. 2 is an instance graph of knowledge-graph-based domain knowledge according to an embodiment of the present disclosure;
FIG. 3 is a structural diagram of a broadcast style determination apparatus according to an embodiment of the present disclosure; and
FIG. 4 is a block diagram of an electronic device configured to implement an embodiment of the present disclosure.

### Detailed Description of Preferred Embodiments

Exemplary embodiments of the present disclosure are illustrated below with reference to the accompanying drawings, which include various details of the present disclosure to facilitate understanding and should be considered only as exemplary. Therefore, those of ordinary skill in the art should be aware that various changes and modifications can be made to the embodiments described herein without departing from the scope and spirit of the present disclosure. Similarly, for clarity and simplicity, descriptions of well-known functions and structures are omitted in the following description.

At present, there are some existing broadcast style determination manners, such as determining a broadcast style according to a broadcast scenario. An emphatic tone is adopted in a navigation scenario, a cheerful tone is adopted in a scenic-spot scenario, and so on. However, an appropriate sentiment cannot be accurately determined in this manner. For example, in a scenic spot, it is obviously inappropriate to broadcast "In the Anti-Japanese War Memorial Hall, the Battle of Xuzhou was the one with the largest scale, the largest number of troops and the most casualties after the outbreak of the Anti-Japanese War" in a cheerful tone. In view of this, the present disclosure provides a new method to determine a broadcast style. The following is a detailed description of the method according to the present disclosure with reference to embodiments.

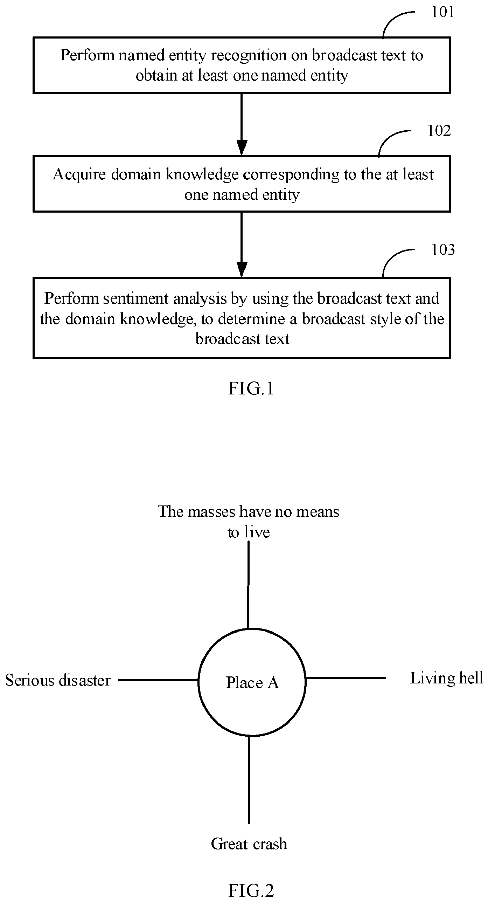

FIG. 1 is a general flowchart of a method according to an embodiment of the present disclosure. The method is performed by a broadcast style determination apparatus. The apparatus may be an application located on a local terminal or a functional unit in an application located on a local terminal such as a plug-in or a Software Development Kit (SDK), or located on a server side, which is not particularly limited herein in the embodiment of the present disclosure. As shown in FIG. 1, the method may include the following steps.

In 101, named entity recognition is performed on broadcast text to obtain at least one named entity.

In 102, domain knowledge corresponding to the at least one named entity is acquired.

In 103, sentiment analysis is performed by using the broadcast text and the domain knowledge, to determine a broadcast style of the broadcast text.

With the above technical solution, domain knowledge corresponding to a named entity included in broadcast text is integrated into sentiment analysis, so that the sentiment analysis can capture internal information contained in an important object of the broadcast text and capture an implication, so as to accurately obtain a broadcast style suitable for the broadcast text. The broadcast style enables broadcast voice to be more emotional.

The above steps are described in detail below with reference to embodiments. Firstly, the step 101 of "performing named entity recognition on broadcast text to obtain at least one named entity" is described in detail.

The broadcast text referred to in the present disclosure refers to text to be broadcast by voice. That is, the broadcast text is required to be used for voice synthesis prior to voice broadcast.

The broadcast text may be preset content, for example, startup speech content, welcome speech content, fixed broadcast content in a specific scenario, and so on. For example, when a user terminal is positioned in a new region, "Welcome to CC Region" is broadcast ("CC" indicates a specific region name). In another example, navigation text in a navigation scenario is "Turn left at CCC ahead" ("CCC" indicates a specific building name), and so on.

The broadcast text may also be text content obtained from a third party, such as news content or article content acquired from the third party.

The broadcast text may also be text generated in response to voice inputted by a user during interaction with the user. For example, the user inputs voice "Where is CCCC", and broadcast text "CCCC is in No. 3 Jianshe Middle Road" is generated in response to the voice inputted by the user.

The so-called named entity refers to a person name, an organization name, a place name, date and time, a country name, a product name, and any other entities identified by names. Named entity recognition is a relatively mature technology at present, which may be performed based on dictionaries, based on rules, based on machine learning algorithms, or based on a combination thereof. The specific manner of named entity recognition is not described in detail herein.

As a preferred implementation, after named entity recognition is performed on the broadcast text, if a user retrieves at least one of named entities included in the broadcast text within a preset history period, the at least one named entity retrieved by the user is used for domain knowledge acquisition in the subsequent step 102; and otherwise, the at least one named entity obtained by named entity recognition is used for domain knowledge acquisition. In this manner, the recognized named entity can better meet a user requirement and reflect the content that the user cares more about.

For example, broadcast text for the user is "A is located in the south of B, and the environment is very beautiful", in which "A" and "B" are two place names respectively. If the user has searched for "A" within 1 hour, "A" may be used as the named entity acquired in this step to obtain domain knowledge in the subsequent step 102. If the user has not searched for "A" and "B" within 1 hour, "A" and "B" may be used as the named entities acquired in this step to obtain domain knowledge in the subsequent step 102.

the step 102 of "acquiring domain knowledge corresponding to the at least one named entity" is described in detail below with reference to embodiments.

In general, sentiment determination for the broadcast text is based on sentence granularity. That is, the broadcast text is segmented into sentences, at least one named entity is determined for each sentence, and domain knowledge corresponding to the named entity is determined.

In this step, the domain knowledge corresponding to the named entity may be acquired in, but not limited to, the following manners.

In the first manner, the named entities are searched for by using a search engine, to obtain top M search results corresponding to the named entities as the domain knowledge, where M is a preset positive integer.

For example, assuming that a sentence in the broadcast text includes only one place name, after a search for the place name, titles, abstracts, illustrations, video or text of top 5 search results are taken as domain knowledge.

For example, assuming that a sentence in the broadcast text includes two place names, after a search for the place names, top 5 search results corresponding to the two places respectively are taken, and titles, abstracts, illustrations, video or text of the 10 search results are taken as domain knowledge.

In the second manner, the at least one named entity is spliced, and an entity obtained by splicing is searched for by using a search engine, to obtain top N search results as the domain knowledge, where N is a preset positive integer.

For example, assuming that a sentence in the broadcast text includes two place names, for example, Place Name A and Place Name B, "AB" is obtained after Place Name A and Place Name B are spliced, a search is performed with "AB" as a query, and titles, abstracts, illustrations, video or text of top 5 search results are taken as domain knowledge.

In the third manner, the domain knowledge corresponding to the at least one named entity is acquired by using a pre-constructed knowledge graph.

In the embodiment of the present disclosure, the pre-constructed knowledge graph may be acquired. Nodes in the knowledge graph include named entities, and the knowledge graph further includes attributes of the nodes. In the embodiment of the present disclosure, timeliness information corresponding to the named entities, such as news and top search, may be periodically used as attributes of the named entities in the knowledge graph. The specific construction manner of the knowledge graph is not limited, and only attributes corresponding to the named entities are acquired as domain knowledge by using the knowledge graph.

It may also be seen from the above descriptions that the domain knowledge in the present disclosure may include at least one of text, rich media and a knowledge graph.

The text is easy to understand, and is not excessively elaborated.

The rich media may include pictures, video, audio, etc. Sentiment information contained in the named entities can also be recognized from domain knowledge of the rich media. For example, pictures of a region that are mostly desolate indicate sadness. In another example, pictures of a region that are mostly celebrating scenarios indicate a festive sentiment.

In the knowledge graph as shown in FIG. 2, attributes of Place A include content such as the masses having no means to live, living hell and great crash, which indicates that Place A contains sadness.

The step 103 of "performing sentiment analysis by using the broadcast text and the domain knowledge, to determine a broadcast style of the broadcast text" is described in detail below with reference to embodiments.

If the broadcast text includes only one sentence, sentiment analysis is performed by using the sentence and domain knowledge determined for the sentence, to determine a broadcast style of the sentence.

If the broadcast text includes two or more sentences, for each sentence, sentiment analysis is performed by using the sentence and domain knowledge corresponding to a named entity included in the sentence, to determine a broadcast style of the sentence.

That is, if a sentence includes a named entity, the broadcast style of the sentence is determined according to content of the sentence and domain knowledge corresponding to the named entity. If a sentence includes no named entity, the broadcast style of the sentence is determined only according to content of the sentence, or a default broadcast style, such as a smooth tone, is adopted.

In the embodiment of the present disclosure, if the domain knowledge of the named entity included in the sentence is determined, sentiment analysis is performed by using the sentence and domain knowledge of the sentence. That is, the sentence and the domain knowledge of the sentence are inputted into a sentiment analysis model, and the broadcast style of the broadcast text is determined by using a sentiment type outputted by the sentiment analysis model. A sentiment analysis manner used by the sentiment analysis model may be any existing manner, which is not limited in the present disclosure. For example, the manner may include, but is not limited to, the following three manners.

### Manner I: sentiment-dictionary-based sentiment analysis

A sentiment dictionary may be pre-constructed manually or automatically. After word segmentation of the sentences and the domain knowledge and removal of stop words, each word is traversed. If the word traversed is a sentiment word in the sentiment dictionary, the word is searched for whether there are prefix degree words or prefix negative words, and a sentiment score of the sentiment word is calculated by using numbers of occurrences and weights of the prefix degree words, the prefix negative words and the sentiment word. Finally, a sentiment type is determined as a result of sentiment analysis according to the sentiment scores of the sentiment words.

### Manner II: machine-learning-based sentiment analysis

Features of a sentence and domain knowledge of a named entity included in the sentence are extracted, and then sentiment analysis is performed according to the extracted features by using a pre-trained machine learning model, to obtain sentiment types.

The machine learning model may be, but is not limited to, naive Bayes, maximum entropy, and support vector machine classification models.

### Manner III: deep-learning-based sentiment analysis

A sentence and domain knowledge of a named entity included in the sentence are inputted into a pre-trained deep learning model, and the deep learning model converts words in the sentence and the domain knowledge into word vectors and then maps them to specific sentiment classification results, to obtain sentiment types.

The deep learning model may be, but is not limited to, a Feedforward Neural Network (FNN), a Word2Vec technology, a Convolutional Neural Networks (CNN), a Recurrent Neural Network (RNN) or a Long Short-Term Memory (LSTM) network.

When a sentiment analysis result corresponding to the sentence is determined, the sentence and the domain knowledge may be inputted into the sentiment analysis model respectively for sentiment analysis, to obtain a sentiment corresponding to the sentence and a sentiment corresponding to the domain knowledge, and then the sentiment types obtained are sorted by voting (i.e. sorted according to frequencies of the sentiment types obtained), and the sentiment type with the most votes is obtained as a final sentiment analysis result of the sentence.

The sentence and the domain knowledge may be inputted into the sentiment analysis model as a whole for sentiment analysis, and a sentiment type outputted by the sentiment analysis model is used as a final sentiment analysis result of the sentence.

After the sentiment type is determined, the broadcast style of the broadcast text may be determined according to the sentiment type. The sentiment type may include joy, excitation, happiness, affection, emotion, excitement, surprise, outrage, anger, rage, sadness, desolation, misery, grief, warmth, boredom, worry, fear, sorrow, disappointment, depression, repression, and so on. The broadcast style may include smooth, sad, emphatic, cheerful, solemn, and so on. Sentiment types correspond to broadcast styles in advance.

During the training of the sentiment analysis model, the broadcast styles may also be directly used as sentiment analysis results. In this way, when sentiment analysis is performed by using the sentiment analysis model, broadcast styles are obtained directly.

In addition, if no named entity is recognized from one sentence or the whole broadcast text, it means that the sentence has no relevant domain knowledge to refer to. In this case, sentiment analysis is performed only for the sentence or the broadcast text, which is equivalent to performing sentiment analysis only based on sentence semantics and using obtained sentiments for broadcasting. Alternatively, a default broadcast style, such as a smooth tone, is directly adopted for the sentence or the broadcast text from which no named entity is recognized.

After the above processing, broadcast styles of the following sentences may be determined.

**Table 1**

| | Broadcast text | Broadcast style | |
|---|---|---|---|
| | "Ready to go. The whole journey is 6 km, through Fazhan Avenue and Jiefang Avenue" | | Gentle |
| | "There are several cameras for driving against traffic regulations within one kilometer ahead. Please fasten your seat belt" | | Smooth |
| | "Three hundred meters away, photos will be taken if the vehicle runs on the line and does not give way to pedestrians. More tickets are generated here" | | Emphatic |
| | "Yes, how can I help you?" | | Doubtful |
| | "Arrive at Destination CC Anti-Japanese War Memorial Hall" | | Solemn |

Furthermore, after the broadcast style of the broadcast text is obtained, voice synthesis is performed by using the broadcast text and broadcast style information of the broadcast text, to obtain broadcast voice corresponding to the final broadcast text. The broadcast voice is emotional.

The implementation of the above method embodiment is described more vividly below with reference to a specific example. It is assumed that the broadcast text is "You are approaching the south gate of CC Anti-Japanese War Memorial Hall. Photos will be taken here if the vehicle runs on the line and does not give way to pedestrians. More tickets are generated!"

Firstly, the broadcast text is segmented into two sentences "You are approaching the south gate of CC Anti-Japanese War Memorial Hall" and "Photos will be taken here if the vehicle runs on the line and does not give way to pedestrians. More tickets are generated". "CC" refers to a city name.

After named entity recognition on the first sentence, "CC Anti-Japanese War Memorial Hall" is obtained. Top 5 search result titles corresponding to the named entity acquired by using a search engine are taken as domain knowledge. Such search result titles mostly reflect historical events related to the Anti-Japanese War. Therefore, after the sentence and the domain knowledge are inputted into the sentiment analysis model, the corresponding broadcast style obtained is solemn.

After named entity recognition on the second sentence "Photos will be taken here if the vehicle runs on the line and does not give way to pedestrians. More tickets are generated", no named entity is obtained. Then, only the sentence is inputted into the sentiment analysis model, and the corresponding broadcast style obtained is emphatic.

Then, after voice synthesis, "You are approaching the south gate of CC Anti-Japanese War Memorial Hall" is broadcast in a solemn tone, and "Photos will be taken here if the vehicle runs on the line and does not give way to pedestrians. More tickets are generated" is broadcast in an emphatic tone.

The above method according to the present disclosure may be applied to, but is not limited to, the following application scenarios:
Voice broadcast scenarios in map applications, such as navigation voice broadcast and scenic-spot information broadcast.

Voice broadcast scenarios of voice assistants installed in terminal devices or any application.

Voice interaction scenarios between intelligent terminal devices, such as intelligent speakers and users.

Broadcast scenarios in news applications, reading applications, radio applications, and so on. For example, news is converted into voice for broadcasting, content of books is converted into voice for broadcasting, radio releases are automatically converted into voice for broadcasting, and so on.

The above is a detailed description of the method according to the present disclosure. The following is a detailed description of the apparatus according to the present disclosure with reference to embodiments.

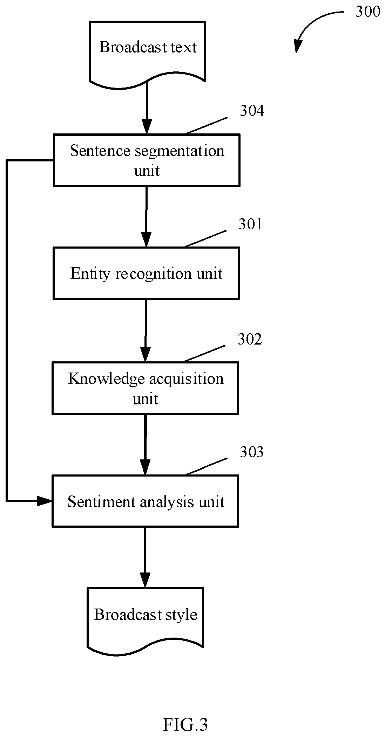

FIG. 3 is a structural diagram of a broadcast style determination apparatus according to an embodiment of the present disclosure. As shown in FIG. 3, the apparatus 300 may include: an entity recognition unit 301, a knowledge acquisition unit 302 and a sentiment analysis unit 303, and further include a sentence segmentation unit 304. Main functions of the component units are as follows.

The entity recognition unit 301 is configured to perform named entity recognition on broadcast text to obtain at least one named entity.

The knowledge acquisition unit 302 is configured to acquire domain knowledge corresponding to the at least one named entity.

The sentiment analysis unit 303 is configured to perform sentiment analysis by using the broadcast text and the domain knowledge, to determine a broadcast style of the broadcast text.

As one preferred implementation, the entity recognition unit 301 may perform named entity recognition on the broadcast text, if a user retrieves at least one of named entities included in the broadcast text within a preset history period, use the at least one named entity retrieved by the user domain knowledge acquisition; and otherwise, use the at least one named entity obtained by named entity recognition for domain knowledge acquisition.

The knowledge acquisition unit 302 may search for the at least one named entity by using a search engine, to obtain top M search results corresponding to the named entities as the domain knowledge, M being a preset positive integer; or
splice the at least one named entity, and search for an entity obtained by splicing by using a search engine, to obtain top N search results as the domain knowledge, N being a preset positive integer; or
acquire the domain knowledge corresponding to the at least one named entity by using a pre-constructed knowledge graph.

The domain knowledge includes at least one of text, rich media and a knowledge graph.

As one implementation, the sentence segmentation unit 304 is configured to segment the broadcast text into sentences. The sentence segmentation unit 304 may be executed prior to the entity recognition unit 301, as shown in the figure. Alternatively, it may be executed in other stages, provided that it is executed prior to the sentiment analysis unit 303.

Correspondingly, the sentiment analysis unit 303 is specifically configured to, for each sentence, perform sentiment analysis by using the sentence and domain knowledge corresponding to a named entity included in the sentence, to determine a broadcast style of the sentence.

Furthermore, the sentiment analysis unit 303 may be further configured to perform, for the sentence including no named entity, sentiment analysis by using content of the sentence, to determine a broadcast style of the sentence or determine that the sentence uses a default broadcast style.

As one implementation, the sentiment analysis unit 303 is specifically configured to input the broadcast text and the domain knowledge into a sentiment analysis model, and determine the broadcast style of the broadcast text by using a sentiment type outputted by the sentiment analysis model.

Furthermore, after the broadcast style of the broadcast text is obtained, a voice synthesis unit (not shown in the figure) performs voice synthesis by using the broadcast text and broadcast style information of the broadcast text, to obtain broadcast voice corresponding to the final broadcast text.

Various embodiments in the specification are described progressively. Same and similar parts among the embodiments may be referred to one another, and each embodiment focuses on differences from other embodiments. In particular, the apparatus embodiments are basically similar to the method embodiments, so the description thereof is relatively simple. Related parts may be obtained with reference to the corresponding description in the method embodiments.

Acquisition, storage and application of users' personal information involved in the technical solutions of the present disclosure comply with relevant laws and regulations, and do not violate public order and moral.

According to embodiments of the present disclosure, the present disclosure further provides an electronic device, a readable storage medium and a computer program product.

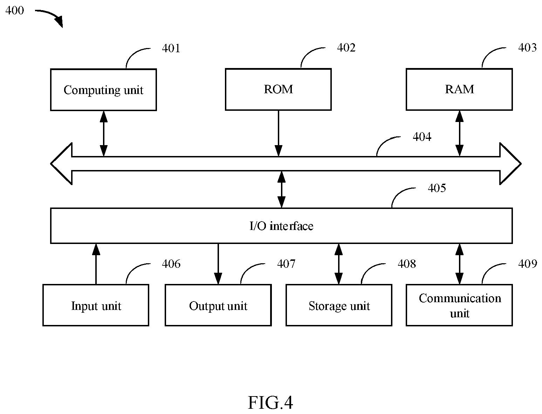

FIG. 4 is a block diagram of an electronic device configured to perform a broadcast style determination method according to an embodiment of the present disclosure. The electronic device is intended to represent various forms of digital computers, such as laptops, desktops, workbenches, personal digital assistants, servers, blade servers, mainframe computers and other suitable computers. The electronic device may further represent various forms of mobile devices, such as personal digital assistants, cellular phones, smart phones, wearable devices and other similar computing devices. The components, their connections and relationships, and their functions shown herein are examples only, and are not intended to limit the implementation of the present disclosure as described and/or required herein.

As shown in FIG. 4, the device 400 includes a computing unit 401, which may perform various suitable actions and processing according to a computer program stored in a read-only memory (ROM) 402 or a computer program loaded from a storage unit 408 into a random access memory (RAM) 403. The RAM 403 may also store various programs and data required to operate the device 400. The computing unit 401, the ROM 402 and the RAM 403 are connected to one another by a bus 404. An input/output (I/O) interface 405 may also be connected to the bus 404.

A plurality of components in the device 400 are connected to the I/O interface 405, including an input unit 406, such as a keyboard and a mouse; an output unit 407, such as various displays and speakers; a storage unit 408, such as disks and discs; and a communication unit 409, such as a network card, a modem and a wireless communication transceiver. The communication unit 409 allows the device 400 to exchange information/data with other devices over computer networks such as the Internet and/or various telecommunications networks.

The computing unit 401 may be a variety of general-purpose and/or special-purpose processing components with processing and computing capabilities. Some examples of the computing unit 401 include, but are not limited to, a central processing unit (CPU), a graphics processing unit (GPU), various artificial intelligence (AI) computing chips, various computing units that run machine learning model algorithms, a digital signal processor (DSP), and any appropriate processor, controller or microcontroller, etc. The computing unit 401 performs the methods and processing described above, such as the broadcast style determination method. For example, in some embodiments, the broadcast style determination method may be implemented as a computer software program that is tangibly embodied in a machine-readable medium, such as the storage unit 408.

In some embodiments, part or all of a computer program may be loaded and/or installed on the device 400 via the ROM 402 and/or the communication unit 409. One or more steps of the broadcast style determination method described above may be performed when the computer program is loaded into the RAM 403 and executed by the computing unit 401. Alternatively, in other embodiments, the computing unit 401 may be configured to perform the broadcast style determination method by any other appropriate means (for example, by means of firmware).

Various implementations of the systems and technologies disclosed herein can be realized in a digital electronic circuit system, an integrated circuit system, a field programmable gate array (FPGA), an application-specific integrated circuit (ASIC), an application-specific standard product (ASSP), a system on chip (SOC), a complex programmable logic device (CPLD), computer hardware, firmware, software, and/or combinations thereof. Such implementations may include implementation in one or more computer programs that are executable and/or interpretable on a programmable system including at least one programmable processor, which can be special or general purpose, configured to receive data and instructions from a storage system, at least one input apparatus, and at least one output apparatus, and to transmit data and instructions to the storage system, the at least one input apparatus, and the at least one output apparatus.

Program codes configured to implement the methods in the present disclosure may be written in any combination of one or more programming languages. Such program codes may be supplied to a processor or controller of a general-purpose computer, a special-purpose computer, or another programmable data processing apparatus to enable the function/operation specified in the flowchart and/or block diagram to be implemented when the program codes are executed by the processor or controller. The program codes may be executed entirely on a machine, partially on a machine, partially on a machine and partially on a remote machine as a stand-alone package, or entirely on a remote machine or a server.

In the context of the present disclosure, machine-readable media may be tangible media which may include or store programs for use by or in conjunction with an instruction execution system, apparatus or device. The machine-readable media may be machine-readable signal media or machine-readable storage media. The machine-readable media may include, but are not limited to, electronic, magnetic, optical, electromagnetic, infrared, or semiconductor systems, apparatuses or devices, or any suitable combinations thereof. More specific examples of machine-readable storage media may include electrical connections based on one or more wires, a portable computer disk, a hard disk, an RAM, an ROM, an erasable programmable read only memory (EPROM or flash memory), an optical fiber, a compact disk read only memory (CD-ROM), an optical storage device, a magnetic storage device, or any suitable combination thereof.

To provide interaction with a user, the systems and technologies described here can be implemented on a computer. The computer has: a display apparatus (e.g., a cathode-ray tube (CRT) or a liquid crystal display (LCD) monitor) for displaying information to the user; and a keyboard and a pointing apparatus (e.g., a mouse or trackball) through which the user may provide input for the computer. Other kinds of apparatuses may also be configured to provide interaction with the user. For example, a feedback provided for the user may be any form of sensory feedback (e.g., visual, auditory, or tactile feedback); and input from the user may be received in any form (including sound input, voice input, or tactile input).

The systems and technologies described herein can be implemented in a computing system including background components (e.g., as a data server), or a computing system including middleware components (e.g., an application server), or a computing system including front-end components (e.g., a user computer with a graphical user interface or web browser through which the user can interact with the implementation schema of the systems and technologies described here), or a computing system including any combination of such background components, middleware components or front-end components. The components of the system can be connected to each other through any form or medium of digital data communication (e.g., a communication network). Examples of the communication network include: a local area network (LAN), a wide area network (WAN) and the Internet.

The computer system may include a client and a server. The client and the server are generally far away from each other and generally interact via the communication network. A relationship between the client and the server is generated through computer programs that run on a corresponding computer and have a client-server relationship with each other. The server may be a cloud server, also known as a cloud computing server or cloud host, which is a host product in the cloud computing service system to solve the problems of difficult management and weak business scalability in the traditional physical host and a virtual private server (VPS). The server may also be a distributed system server, or a server combined with blockchain.

It should be understood that the steps can be reordered, added, or deleted using the various forms of processes shown above. For example, the steps described in the present application may be executed in parallel or sequentially or in different sequences, provided that desired results of the technical solutions disclosed in the present disclosure are achieved, which is not limited herein.

The above specific implementations do not limit the protection scope of the present disclosure. Those skilled in the art should understand that various modifications, combinations, sub-combinations, and replacements can be made according to design requirements and other factors. Any modifications, equivalent substitutions and improvements made within the spirit and principle of the present disclosure all should be included in the protection scope of the present disclosure.

## Claims

1. A broadcast style determination method, comprising:
performing (101) named entity recognition on broadcast text to obtain at least one named entity;
acquiring (102) domain knowledge corresponding to the at least one named entity; and
performing (103) sentiment analysis by using the broadcast text and the domain knowledge, to determine a broadcast style of the broadcast text.

2. The method according to claim 1, wherein the performing named entity recognition on broadcast text to obtain at least one named entity comprises:
performing named entity recognition on the broadcast text; and
using, if a user retrieves at least one of named entities comprised in the broadcast text within a preset history period, the at least one named entity retrieved by the user for domain knowledge acquisition; and otherwise, using the at least one named entity obtained by named entity recognition for domain knowledge acquisition.

3. The method according to claim 1, wherein the acquiring domain knowledge corresponding to the at least one named entity comprises:
searching for the at least one named entity by using a search engine, to obtain top M search results corresponding to the named entities as the domain knowledge, M being a preset positive integer; or
splicing the at least one named entity, and searching for an entity obtained by splicing by using a search engine, to obtain top N search results as the domain knowledge, N being a preset positive integer; or
acquiring the domain knowledge corresponding to the at least one named entity by using a pre-constructed knowledge graph.

4. The method according to claim 1 or 3, wherein the domain knowledge comprises at least one of text, rich media and a knowledge graph.

5. The method according to claim 1, further comprising: segmenting the broadcast text into sentences; and
the performing sentiment analysis by using the broadcast text and the domain knowledge, to determine a broadcast style of the broadcast text comprising:
for each sentence, performing sentiment analysis by using the sentence and domain knowledge corresponding to a named entity comprised in the sentence, to determine a broadcast style of the sentence, preferably
the method further comprising:
performing, for the sentence comprising no named entity, sentiment analysis by using content of the sentence, to determine a broadcast style of the sentence or determine that the sentence uses a default broadcast style.

6. The method according to claim 1, wherein the performing sentiment analysis by using the broadcast text and the domain knowledge, to determine a broadcast style of the broadcast text comprises:
inputting the broadcast text and the domain knowledge into a sentiment analysis model, and determining the broadcast style of the broadcast text by using a sentiment type outputted by the sentiment analysis model.

7. A broadcast style determination apparatus (300), comprising:
an entity recognition unit (301) configured to perform named entity recognition on broadcast text to obtain at least one named entity;
a knowledge acquisition unit (302) configured to acquire domain knowledge corresponding to the at least one named entity; and
a sentiment analysis unit (303) configured to perform sentiment analysis by using the broadcast text and the domain knowledge, to determine a broadcast style of the broadcast text.

8. The apparatus (300) according to claim 7, wherein the entity recognition unit (301) is specifically configured to use, if a user retrieves at least one of named entities comprised in the broadcast text within a preset history period, the at least one named entity retrieved by the user for domain knowledge acquisition; and otherwise, use the at least one named entity obtained by named entity recognition for domain knowledge acquisition.

9. The apparatus (300) according to claim 7, wherein the knowledge acquisition unit (302) is specifically configured to search for the at least one named entity by using a search engine, to obtain top M search results corresponding to the named entities as the domain knowledge, M being a preset positive integer; or
splice the at least one named entity, and search for an entity obtained by splicing by using a search engine, to obtain top N search results as the domain knowledge, N being a preset positive integer; or
acquire the domain knowledge corresponding to the at least one named entity by using a pre-constructed knowledge graph.

10. The apparatus (300) according to claim 7 or 9, wherein the domain knowledge comprises at least one of text, rich media and a knowledge graph.

11. The apparatus (300) according to claim 7, further comprising:
a sentence segmentation unit (304) configured to segment the broadcast text into sentences; and
the sentiment analysis unit (303) being specifically configured to, for each sentence, perform sentiment analysis by using the sentence and domain knowledge corresponding to a named entity comprised in the sentence, to determine a broadcast style of the sentence, preferably
the sentiment analysis unit is further configured to perform, for the sentence comprising no named entity, sentiment analysis by using content of the sentence, to determine a broadcast style of the sentence or determine that the sentence uses a default broadcast style.

12. The apparatus (300) according to claim 7, wherein the sentiment analysis unit (303) is specifically configured to input the broadcast text and the domain knowledge into a sentiment analysis model, and determine the broadcast style of the broadcast text by using a sentiment type outputted by the sentiment analysis model.

13. An electronic device, comprising:
at least one processor; and
a memory in communication connection with the at least one processor; wherein
the memory stores instructions executable by the at least one processor which, when executed by the at least one processor, enable the at least one processor to perform the method according to any one of claims 1 to 6.

14. A non-transitory computer-readable storage medium storing computer instructions which, when executed by a computer, cause a computer to perform the method according to any one of claims 1 to 6.

15. A computer program product, comprising a computer program, wherein, when the computer program is executed by a processor, the method according to any one of claims 1 to 6 is performed.
